# EUROPÄISCHE PATENTANMELDUNG

(11) **EP 0 943 842 A1**
(43) Veröffentlichungstag der Anmeldung: **22.09.1999**
(21) Anmeldenummer: 99102941.4
(22) Anmeldetag: 13.02.1999
(51) Int. Cl.: F16H 55/22, F16H 57/02, E05F 15/16, B62D 5/04

(54) **Schneckengetriebe**

(30) Priorität: 19.03.1998 DE 19811977
(71) Anmelder: Mannesmann VDO Aktiengesellschaft, 60388 Frankfurt am Main (DE)
(72) Erfinder: Ganser, Otmar, 61476 Kronberg (DE)
(74) Vertreter: Klein, Thomas, Dipl.-Ing.

(57) **Zusammenfassung**

Schneckengetriebe werden insbesondere als Untersetzungsgetriebe verwendet, um mit relativ schnell laufenden Motoren langsame Stellbewegungen durchführen zu können. Bei der Verwendung eines Schneckengetriebes (14) in einer elektrischen Lenkhilfe (10) für Kraftfahrzeuge treten Stoßbelastungen auf, die zur Schonung der Schnecke (18) aufgefangen werden müssen. Bisher wurde hierzu eine Rutschkupplung zwischen dem Motor (12) und der Schnecke (18) vorgesehen. Um die Konstruktion zu vereinfachen und den Montageaufwand zu reduzieren, wird vorgeschlagen, die Schneckenwelle (20) in axialer Richtung elastisch nachgiebig zu lagern. Überbelastungen werden nun durch die axiale elastische Verlagerung der Schneckenwelle (20) aufgefangen. Eine gemeinsame Ausbildung von Schneckenwelle und Motorwelle ist möglich, so daß der Aufwand für die Lagerung vermindert wird.

## Beschreibung

Die Erfindung befaßt sich mit einem Schneckengetriebe mit einer Überlastschutzvorrichtung.

Schneckengetriebe zählen zu den Standardgetrieben und finden in einer Vielzahl von Anwendungen in den unterschiedlichsten Übersetzungsverhältnissen Verwendung, wobei je nach Anwendungsfall Schneckengetriebe mit oder ohne Selbsthemmung gewählt werden.

Bei einigen Anwendungsfällen, zum Beispiel bei der Verwendung eines Schneckengetriebes als Untersetzungsgetriebe bei elektrischen Lenkhilfen, sind Schneckengetriebe stoßartigen Belastungen ausgesetzt, wodurch die im gewöhnlichen Betrieb durch das maximale Drehmoment erzeugten Kräfte an den Zahnflanken und in den Lagern überschritten werden. Insbesondere die Zahnflanken der Schnecke, die nach Möglichkeit aus Kosten- und Geräuschsgründen aus Kunststoff gefertigt wird, reagieren auf stoßartige Belastungen empfindlich. Bei Schneckengetrieben, die meist als Untersetzungsgetriebe mit großen Übersetzungsverhältnis arbeiten, entstehen derartige Belastungen beispielsweise dadurch, daß der mit der Schneckenwelle verbundene Antriebsmotor mit hoher Drehzahl rotiert und abtriebsseitig ein abruptes Abstoppen des angetriebenen Elements zum Beispiel dadurch erfolgt, daß die Räder eines Kraftfahrzeuges ihre Anschlagstellung erreichen. Die Massenträgheit des Antriebsstranges sorgt dabei wegen der hohen Drehzahl für eine kurzzeitige Belastung, die die gewöhnlich im Betrieb auftretenden Kräfte erheblich übersteigt.

Aus dem Bereich der elektrischen Lenkhilfen ist zur Vermeidung solcher Überlastspitsen eine Lösung bekannt, bei der zwischen dem elektrischen Antriebsmotor und dem Schneckenrad eine Rutschkupplung vorgesehen ist, die im Überlastfall die Belastung der Zahnflanken begrenzt. Eine solche Lösung ist jedoch sehr aufwendig sowie kostenintensiv und unterliegt im Betrieb bei häufiger auftretenden Überlastungen einem gewissen Verschleiß.

Bei selbsthemmend ausgelegten Schneckengetrieben besteht zudem das Problem, daß von der Abtriebsseite her auf das Schneckengetriebe einwirkende Stoßbelastungen nicht durch einen in Drehrichtung nachgebenden Antriebsstrang aufgefangen werden können. Vielmehr wird die gesamte Stoßbelastung in die starre Zahnflanke der Schnecke eingeleitet.

Die Aufgabe der Erfindung besteht darin, einen Überlastschutz für Schneckengetriebe zu schaffen, der ohne erheblichen konstruktiven Mehraufwand Überbelastungen auffangen kann.

Erfindungsgemäß wird die Aufgabe durch ein Schneckengetriebe gelöst, bei welchem die Schneckenwelle in axialer Richtung elastisch nachgiebig gelagert ist.

Durch die nachgiebige axiale Lagerung der Schneckenwelle können Stoßbelastungen aufgefangen und die maximal entstehenden Kräfte an den Zahnflanken reduziert werden. Dabei können sowohl translatorische Bewegungen des Antriebsmotor als auch Stoßkräfte, die von der Abtriebsseite her auf die Schnecke einwirken, durch die axial nachgiebige Lagerung gedämpft werden.

Zweckmäßigerweise ist die Schneckenwelle in axialer Richtung beidseitig über vorgespannte Federelemente, zum Beispiel Tellerfedern oder Schraubenfedern, abgestützt. Derartige Federelemente lassen sich leicht zwischen dem Gehäuse und den Laufringen der Lager der Schneckenwelle anordnen, ohne daß dadurch ein erheblicher konstruktiver Mehraufwand entstünde und die Montage verkompliziert würde. Die Vorspannung der Federelemente wird so gewählt, daß es bei den im Betrieb auftretenden Belastungen nicht oder nur zu unwesentlichen axialen Verlagerungen kommt. Federelemente mit progressiven Kennlinien oder entsprechend zusammengestellte Federpakete besitzen noch höhere Sicherheitsreserven und wirken einem Durchschlagen der Federelemente entgegen.

Vorzugsweise ist den beiden Federelementen jeweils ein Anschlag zugeordnet, der den Federweg des Federelements in der Entspannungsrichtung begrenzt. Hierdurch wird verhindert, daß die Vorspannkräfte der beiden Federelemente über die Schneckenwelle kompensiert werden. Erst ab einer Axialkraft, die die Vorspannkraft eines Federelements übersteigt, tritt eine axiale Verlagerung ein, wobei das nicht komprimierte Federelement in seiner Ruhelage verharrt.

Eine weitere vorteilhafte Maßnahme zur Erhöhung der auffangbaren Last besteht darin, daß auf beiden Seiten der Schneckenwelle feststehende, nachgiebige Anschlagpuffer vorgesehen sind, die in der Ruhelage der Welle einen bestimmten Abstand zu den Wellenenden aufweisen.

Bei sehr großen Überbelastungen gelangen die Wellenenden in den Wirkbereich der Anschlagpuffer, die als zusätzliches elastisches Element für eine weitere Progression der Gesamtfederkennlinie sorgen.

In weiterer bevorzugter Ausgestaltung der Erfindung sind axial nachgiebige, feststehende Reibelemente vorgesehen, die mit der Stirnfläche der Schneckenwelle oder mit an dieser vorgesehenen Reibkörpern bei entsprechender axialer Verlagerung der Schneckenwelle zusammenwirken. Die Reibelemente sorgen im Überlastfall einerseits für einen zusätzlichen Abbau der kinetischen Rotationsenergie der Schneckenwelle (die Rotation wird abgebremst) und gegebenenfalls des Antriebsmotors und haben außerdem die vorteilhafte Wirkung, daß die von den Federelementen aufgenommene Energie geringer ist. Nach dem Abfangen einer Überbelastung (Abbremsen der Rotation) wird somit eine geringere Energiemenge an das System zurückgegeben.

In einem besonders vorteilhaften Anwendungsfall des erfindungsgemäßen Schneckengetriebes entsprechend den vorhergehenden Ausführungen bildet dieses das Untersetzungsgetriebe zwischen einem elektrischen Antriebsmotor und einer Lenksäule eines Fahrzeuges bei einer elektrischen Lenkhilfe für Kraftfahrzeuge.

In diesem Anwendungsfall ist das Schneckengetriebe bei großer Untersetzung nicht selbsthemmend ausgeführt. Die Stoßbelastungen können bei Kraftfahrzeugen auch insbesondere daher rühren, daß in einer Werkstatt die Vorderräder bei aufgebocktem Fahrzeug manuell bis in die Anschlagstellung verdreht werden, um beispielsweise Wartungsarbeiten an der Bremse durchführen zu können. Dabei wird die Lenksäule mit einer Geschwindigkeit verdreht, die im normalen Fahrbetrieb nicht vorkommt. Es kommt zu einer extremen Beschleunigung des Rotors des elektrischen Antriebsmotors, der bei einer Masse von beispielsweise ungefähr 1 kg auch ein erhebliches Massenträgheitsmoment besitzt. Erreichen die Räder ihre Anschlagsposition, muß die kinetische Energie des Rotors und der Schneckenwelle abgebaut werden, ohne daß es zu einer Überbeanspruchung des Schneckenrades kommt. Das erfindungsgemäße Schneckengetriebe ermöglicht dabei ein weiches Abfangen dieser Belastungsspitze, so daß auf die bei bisher üblichen Lösungen notwendige Rutschkupplung zwischen dem Elektromotor und der Schneckenwelle verzichtet werden kann.

Vorzugsweise sind die Motorwelle und die Schneckenwelle als einstückige Welle ausgebildet.

Im Gegensatz zu den bisher üblichen Ausführungen mit Rutschkupplung ist es durch die einstückige Welle möglich, die separate Lagerung der Motorwelle einzusparen, wodurch einerseits die Reibung des Antriebsstranges reduziert wird und andererseits der konstruktive Aufwand verringert und die Montage vereinfacht wird, da weniger Lager weniger Bauteilaufwand und auch weniger Reibung im System bedeutet. Ein den Wirkungsgrad verringernder Achsversatz zwischen Motorwelle und Schneckenwelle ist ebenfalls ausgeschlossen.

Die Lagerung der einstückigen Welle erfolgt vorzugsweise am freien Ende auf der Seite der Schnecke und zwischen der Schnecke und dem Motor. Damit erfolgt die radiale Abstützung in der Nähe der Schnecke, so daß die durch die Verzahnung einwirkenden Radialkräfte nicht zu einer hohen Biegebeanspruchung der Welle führen können.

Um die axiale Beweglichkeit des Motorrotors sicherzustellen, kann dieser entweder axial beweglich im Stator des Elektromotors angeordnet sein oder der gesamte Elektromotor kann in einer axialen Führung verschieblich gelagert sein.

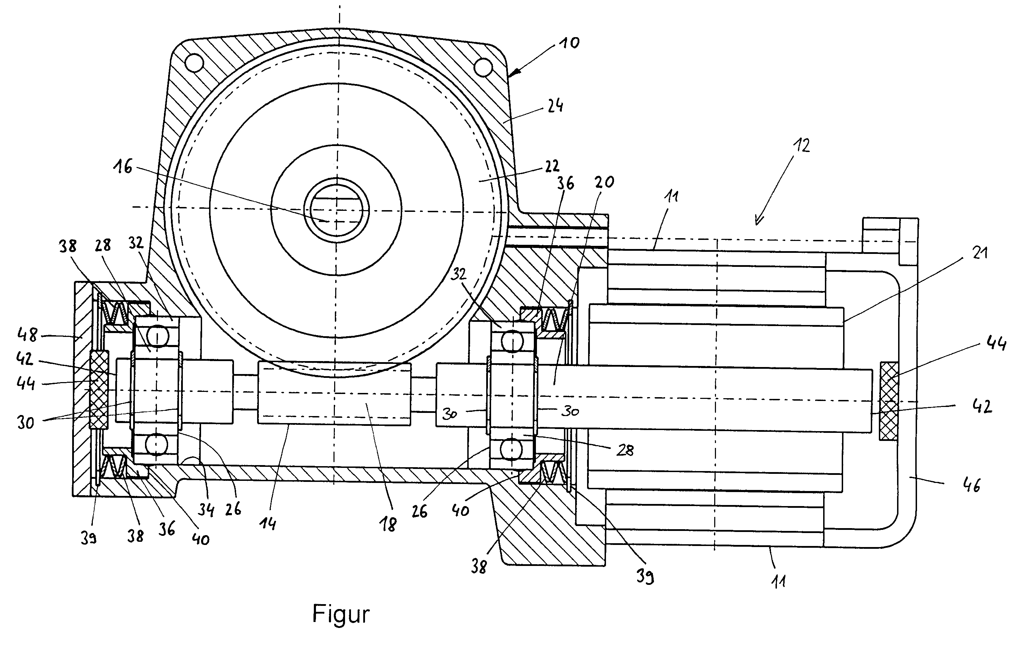

Nachfolgend wird anhand der beigefügten Zeichnung näher auf ein Ausführungsbeispiel der Erfindung eingegangen. Die Abbildung zeigt einen Querschnitt einer elektrischen Lenkhilfe 10, die zur Entlastung des Fahrers von Lenkkräften dient.

Die elektrische Lenkhilfe 10 besitzt einen einen Stator 11 aufweisenden Elektromotor 12, der über ein Schneckengetriebe 14 die Lenksäule 16 des Fahrzeugs unterstützt. Das Schneckengetriebe 14 besteht aus einer Schnecke 18, die drehstarr auf einer Motorwelle 20 - genauso wie ein Rotor 21 - des Elektromotors 12 sitzt, und einem Schneckenrad 22, das drehstarr mit der Lenksäule 16 verbunden ist. Die Schnecke 18 kann, wie im abgebildeten Ausführungsbeispiel, unmittelbar aus der Motorwelle 20 ausgedreht sein, es ist jedoch auch denkbar, eine separate Schnecke auf die Motorwelle 20 aufzuschrumpfen oder in einer sonstigen Weise drehstarr mit der Motorwelle 20 zu verbinden. Das Schneckengetriebe 14 ist nicht selbsthemmend ausgeführt, um die Rückstellbewegung der Lenkung nach durchfahrenen Kurven nicht zu behindern.

Die Lagerung der Motorwelle 20 am Gehäuse 24 der elektrischen Lenkhilfe 10 erfolgt über Kugellager 26, die am freien Ende der Motorwelle 20 neben der Schnecke 18 und zwischen der Schnecke 18 und dem Rotor 21 des Elektromotors 12 vorgesehen sind. Auf der Motorwelle 20 sind die Innenringe 28 der Kugellager 26 axial mit Hilfe von Sicherungsringen 30 festgelegt. Die beiden Lager 26 können wie in der Figur gezeigt angeordnet sein; weitere Anordnungen sind möglich: nämlich die beiden Lager 26 jeweils am äußersten Ende der Motorwelle 20 oder auch jeweils ein Lager 26 - bei Betrachtung der Figur - rechts und links von dem Stator 11, so daß auch dadurch die axiale Verschiebbarkeit des Rotors 21 in Bezug auf den Stator 11 möglich ist, wobei sich zwischen dem Stator 11 und dem Rotor 21 ein Luftspalt befindet. Darüber hinaus kann insbesondere bei einer sehr langen Motorwelle 20 zur Vermeidung von Durchbiegungen zusätzlich zu den in der Figur gezeigten Lagerung am äußersten Ende der Motorwelle 20 zumindest ein drittes Lager - bei Betrachtung der Figur - rechts von dem Stator 11 angeordnet werden.

Die Außenringe 32 der Lager 28 sind in Führungsbahnen 34 im Gehäuse 24 gelagert, die über eine geeignete Passung verfügen, um eine axiale Bewegung der Lager 26 relativ zum Gehäuse 24 zu ermöglichen.

Die nach außen weisende Stirnseite des Lageraußenrings 32 am freien Ende und die zum Motor 12 hin weisende Stirnfläche des Lageraußenrings 32 zwischen der Schnecke 18 und dem Motor 12 stützen sich axial jeweils an Druckringen 36 ab, die in axialer Richtung zum Schneckenrad 18 hin durch Tellertederpakete 38 vorbelastet sind, die wiederum über Axialsicherungsringe 39 am Gehäuse 24 festgelegt sind. In der Ruhestellung liegen die beiden Druckringe 36 an Absätzen 40 an.

In bestimmtem axialen Abstand zu den Stirnflächen 42 der Motorwelle 20 sind Anschlagpuffer 44 beispielsweise aus gummielastischem Material vorgesehen, die im Bereich des Elektromotors 12 an einer Halterung 46 für den Elektromotor und am gegenüberliegenden Ende der Motorwelle an einem Verschlußdeckel 48 für das Gehäuse 24 angeordnet sind. Der Stator 11 des Elektromotors 12 ist an (in) dem Gehäuse 24 beziehungsweise an (in) der Halterung 46 befestigt.

Bedingt durch das hohe Übersetzungsverhältnis des Schneckengetriebes 14 dreht sich der Motor 12, der ein erhebliches Massenträgheitsmoment besitzt, mit erheblich höherer Drehzahl als die Lenksäule 16. Insbesondere, wenn in einer Werkstatt bei aufgebocktem Wagen die Räder manuell verdreht werden, kommt es dabei zu extremen Drehzahlen des Motors 12. Gelangen die Vorderräder an den Lenkanschlag, wird die Lenksäule 16 und damit das Schneckenrad 22 schlagartig blockiert. Die kinetische Energie des Motors 12 und der Motorwelle 20 würde im Falle einer starren axialen Festlegung der Kugellager 26 schlagartig abgebaut werden, was zu einer erheblichen Belastung der Zahnflanken der Schnecke 18 und/oder des Schneckenrades 22 führt. Die axial federnd vorgespannte Abstützung der Kugellager 26 erlaubt es bei der elektrischen Lenkhilfe 10, daß sich die Motorwelle trotz feststehendem Zahnrad 22 unter axialer Verlagerung gegen die Vorspannung der Tellerfedern 38 weiter drehen kann. Dabei wird die kinetische Energie des Motors 12 zum Teil durch Reibung vernichtet und zum Teil von den Tellerfedern 38 aufgefangen. Die Richtung der axialen Verlagerung hängt von der Steigungsrichtung der Schnecke 18 und selbstverständlich von der Drehrichtung des Motors 12 ab. Die Festlegung der Druckringe 36 an den Absätzen 40 in der dargestellten Ruhestellung sorgt dafür, daß die Tellerfedern 38 im Bereich eines Lagers 26 nicht der Vorspannkraft der Tellerfedern 38 des gegenüberliegenden Lagers 26 führen, so daß es erst oberhalb einer bestimmten, auf die Zahnflanken der Schnecke 18 wirkenden Kraft überhaupt zu einer Axialverlagerung der Motorwelle 10 kommt. Die Vorspannkraft der Tellerfedern 38 kann so gewählt werden, daß es unter den normalen, im Betrieb auftretenden Kräften nicht zu einer axialen Verlagerung der Motorwelle 20 kommt.

Um im Falle einer extremen Überbelastung, die die Tellerfedern 38 durchschlagen lassen würde, noch Sicherheitsreserven zu haben, sind die Anschlagpuffer 44 als zusätzliche elastische Elemente vorgesehen. Dadurch ergibt sich eine progressive Kennlinie in Abhängigkeit von der axialen Verlagerung, wobei selbstverständlich durch die Gestaltung der Tellerfedern 38 diese selbst bereits eine progressive Kennlinie besitzen können.

Sobald sich die jeweilige Stirnfläche 42 an den ihr zugehörigen Anschlagpuffer 44 gelegt hat, kommt es auch zu einer Reibbewegung zwischen den beiden Flächen, die den Abbau der kinetischen Energie unterstützt. Gegebenenfalls können noch zusätzliche Reibelemente vorgesehen werden oder, statt der Anschlagpuffer 44, spezielle, axial federnd gelagerte Reibelemente vorgesehen werden.

Die elektrische Lenkhilfe 10 arbeitet im Normalbetrieb sehr reibungsfrei, da sie mit zwei Lagern 26 für die Einheit aus Schneckenwelle und Motorwelle 20 auskommt und kein Winkelversatz, der bei bisherigen Lösungen zwischen Motorwelle und Schneckenwelle auftreten konnte, den Wirkungsgrad verschlechtert.

Die Anwendung des erfindungsgemäßen Schneckengetriebes ist nicht auf die elektrische Lenkhilfe beschränkt, sondern kann zum Beispiel auch bei einer Antriebsvorrichtung für ein Seitenausstellfenster eines Fahrzeuges, welche beispielsweise in der DE 197 06 951.7 beschrieben ist, angewendet werden.

### Bezugszeichenliste:

- 10: elektrische Lenkhilfe
- 11: Stator
- 12: Elektromotor
- 14: Schneckengetriebe
- 16: Lenksäule
- 18: Schnecke
- 20: Motorwelle
- 21: Rotor
- 22: Schneckenrad
- 24: Gehäuse
- 26: Kugellager
- 28: Lager
- 30: Sicherungsring
- 32: Außenringe
- 34: Führungsbahnen
- 36: Druckringe
- 38: Tellerfederpakete
- 39: Axialsicherungsringe
- 40: Absätze
- 42: Stirnfläche
- 44: Anschlagpuffer
- 46: Halterung
- 48: Verschlußdeckel

## Patentansprüche

1. Schneckengetriebe, dadurch gekennzeichnet, daß die Schneckenwelle (20) in axialer Richtung elastisch nachgiebig gelagert ist.

2. Schneckengetriebe nach Anspruch 1, dadurch gekennzeichnet, daß die Schneckenwelle (20) in axialer Richtung beidseitig über vorgespannte Federelemente (38), zum Beispiel Tellerfedern oder Schraubenfedern, abgestützt ist.

3. Schneckengetriebe nach Anspruch 2, dadurch gekennzeichnet, daß den beiden Federelementen (38) jeweils ein Anschlag (40) zugeordnet ist, der den Federweg des zugehörigen Federelements (38) in der Entspannungsrichtung begrenzt.

4. Schneckengetriebe nach einem der Ansprüche 1 bis 3, dadurch gekennzeichnet, daß auf beiden Seiten der Schneckenwelle (20) feststehende, nachgiebige Anschlagpuffer (44) vorgesehen sind, die in der Ruhelage der Welle (20) einen bestimmten Abstand zu den Wellenenden (42) aufweisen.

5. Schneckengetriebe nach Anspruch 4, dadurch gekennzeichnet, daß axial nachgiebige, in Drehrichtung feststehende Reibelemente (44) vorgesehen sind, die mit den Stirnflächen (42) der Schneckenwelle (20) oder mit an dieser vorgesehenen Reibkörpern bei entsprechender axialer Verlagerung der Schneckenwelle (20) zusammenwirken.

6. Schneckengetriebe nach einem der vorhergehnden Ansprüche, gekennzeichnet durch die Anwendung bei einer Antriebsvorrichtung für ein Seitenausstellfenster eines Fahrzeuges.

7. Elektrische Lenkhilfe für Kraftfahrzeuge mit einem elektrischen Antriebsmotor (12), der über ein Schneckengetriebe (14) nach einem der Ansprüche 1 bis 5 auf die Lenksäule (16) des Fahrzeugs wirkt.

8. Elektrische Lenkhilfe nach Anspruch 7, dadurch gekennzeichnet, daß die Motorwelle und die Schneckenwelle als einstückige Welle (20) ausgebildet sind.

9. Elektrische Lenkhilfe nach Anspruch 8, dadurch gekennzeichnet, daß die einstückige Welle (20) an ihrem freien Ende auf der Seite der Schnecke (18) und zwischen der Schnecke (18) und dem Motor (12) gelagert ist.

10. Elektrische Lenkhilfe nach Anspruch 8 oder 9, dadurch gekennzeichnet, daß der Elektromotor (12) axial verschieblich angeordnet ist.

11. Elektrische Lenkhilfe nach Anspruch 8 oder 9, dadurch gekennzeichnet, daß der Rotor im Stator des Elektromotors (12) axial verschieblich ist.
